# FASCICULE DE BREVET EUROPEEN

(11) **EP 3 386 807 B1**
(45) Date de publication et mention de la délivrance du brevet: **28.04.2021**
(21) Numéro de dépôt: 16819616.0
(22) Date de dépôt: 08.12.2016
(51) Int. Cl.: B60R 19/24, B62D 21/15, F16F 7/12

(54) **POUTRE DE CHOCS POUR VÉHICULE AUTOMOBILE COMPRENANT UNE TRAVERSE ET UN ABSORBEUR DE CHOCS**
AUFPRALLTRÄGER FÜR EIN KRAFTFAHRZEUG MIT QUERTRÄGER UND DÄMPFUNGVORRICHTUNG
IMPACT BEAM FOR A MOTOR VEHICLE COMPRISING A TRAVERSE AND A SHOCK ABSORBER

(30) Priorité: 11.12.2015 FR 1562168
(43) Date de publication de la demande: 17.10.2018
(73) Titulaire: Compagnie Plastic Omnium, 69007 Lyon (FR)
(72) Inventeur: GINJA, Stéphane, 01500 Amberieu en Bugey (FR); CHENE, Anthony, 01640 Jujurieux (FR)
(74) Mandataire: LLR
(86) Numéro de dépôt international: PCT/FR2016/053263
(87) Numéro de publication internationale: WO 2017/098155

(56) Documents cités:
- DE-A1- 3 700 854
- DE-A1- 19 533 366
- DE-C1- 19 603 953
- FR-A1- 2 842 152
- US-A1- 2009 026 801
- US-A1- 2015 151 698

## Description

La présente invention concerne un ensemble pour véhicule automobile, plus précisément une poutre de chocs comprenant généralement une traverse et deux absorbeurs effectuant chacun la liaison avec le véhicule par le biais de platines de fixation.

Généralement, une telle poutre de chocs comprend une traverse galbée, se présentant sous la forme d'un élément structurel ou semi structurel, par exemple un profilé métallique ou en matériau composite, et deux absorbeurs de chocs latéraux appelés "crash boxes", de tels absorbeurs étant des modules d'absorption de chocs ayant pour fonction d'absorber de l'énergie par déformation en cas de chocs, notamment lors de chocs de type assurance appelés « Danner » ou de chocs de type « Bumper test ».

Les absorbeurs de chocs sont configurés pour être disposés entre la traverse et deux longerons du véhicule. A cet effet, les absorbeurs sont fixés sur la traverse par un assemblage tel que du rivetage, du collage, de la soudure, ou encore par utilisation d'un adhésif à l'interface, etc. L'objectif est de conserver l'intégrité mécanique de la liaison entre la poutre et les absorbeurs durant n'importe quel type de choc.

Une difficulté réside dans le fait que la traverse peut être dans certains cas sollicitée d'au moins deux façons distinctes contre les absorbeurs de chocs. D'une part, elle peut être sollicitée en compression sur le côté lors d'un choc de type « Danner », au cours duquel le véhicule est par exemple projeté à 15km/h contre un mur rigide incliné à 10° avec 40% de recouvrement. On cherche alors à obtenir une absorption maximale par l'absorbeur de chocs et dans ce cas la traverse travaille en compression au droit de l'absorbeur sollicité. Les absorbeurs sont également sollicités en compression. Notons que, concernant la traverse dans son ensemble, un premier mode de déformation de la traverse en flexion a lieu au préalable de la compression des absorbeurs. D'autre part, la traverse peut être sollicitée en flexion, lors d'un choc dit de poteau, ou en son centre lors d'un choc de type « Bumper test », autrement appelé nouveau choc assurance « IIHS », au cours duquel le véhicule est projeté à 10km/h en étant centré sur un impacteur de chocs rigide, assimilable à une barrière, composé d'un élément déformable représentant la rigidité du système choc d'un second véhicule en cas d'impact frontal. Dans ce cas, et par réaction à l'impact centré, les absorbeurs de chocs sont tout d'abord sollicités en traction vers l'avant, tout particulièrement lorsque la poutre est galbée initialement et perd son galbe par déformation en début de choc, car les extrémités de la traverse tendent à vouloir se détacher des absorbeurs latéraux en raison de l'effort de réaction. En effet, l'absorbeur est fixé sur l'arrière au longeron, en étant retenu généralement par une platine, alors que l'avant de l'absorbeur est tiré vers l'avant par les extrémités de la traverse. Dans le cas d'une traverse droite, non galbée, ce phénomène existe aussi. En effet, chacun des absorbeurs étant fixé de façon rigide au véhicule par le biais de platines, un impact centré sur la traverse induit un effort de réaction en traction au droit des absorbeurs. Dans un deuxième temps, les absorbeurs de chocs sont sollicités en compression vers l'arrière, lorsque la traverse n'est plus fléchie. En raison de ces différents cas de charge, la liaison entre la traverse et les absorbeurs est fortement sollicitée, et il peut arriver que la traverse se désolidarise des absorbeurs de chocs, donc que la poutre de chocs soit moins performante et implique des dommages plus importants que ceux acceptés par les assurances

Le document US 2009/026801 décrit une poutre de chocs pour véhicule automobile conforme le préambule de la revendication 1.

L'invention a notamment pour but de remédier ces inconvénients en proposant une poutre de chocs comprenant une traverse et un absorbeur de chocs assurant une liaison plus robuste entre la traverse et l'absorbeur de chocs.

A cet effet, l'invention a pour objet une poutre de chocs pour véhicule automobile comprenant les caractéristiques techniques de la revendication 1.

Ainsi, on propose d'ajouter un organe d'accrochage qui permet de réaliser une liaison supplémentaire de l'absorbeur de chocs sur la traverse, permettant un ancrage solide de l'absorbeur de chocs sur la traverse, donc un meilleur comportement mécanique aux chocs. En particulier, la forme en bretelle de cet organe d'accrochage permet d'ajouter une résistance à l'arrachement complémentaire lorsque l'absorbeur de chocs est sollicité en traction, et empêche, en retenant la traverse contre l'extrémité de l'absorbeur, une désolidarisation de la traverse par rapport à l'absorbeur de chocs en cas de flexion (centrale), voire de « dégalbage », de la poutre de chocs lors d'un choc de type « Bumper test » ou d'un choc poteau. En effet dans ce cas, la forme de bretelle permet de résister à une traction exercée par les extrémités de la poutre de chocs vers l'avant du véhicule. Par ailleurs, la forme de bretelle augmente les surfaces de contact entre la traverse et l'absorbeur de choc, ce qui permet également de renforcer la liaison par adhésion de surface, mécanique et/ou chimique. On comprend que la bretelle, de même qu'une éventuelle nervure de renforcement, s'étend de part et d'autre de l'interface de contact entre l'absorbeur de chocs et la traverse. Dans le cas d'un absorbeur réalisé par moulage (en particulier par injection), l'organe d'accrochage peut avantageusement être réalisé simultanément lors ce moulage.

On entend par « poutre de choc » un ensemble comprenant une traverse, au moins un absorbeur de type « crash box », en général deux, et de préférence deux platines de fixation de chaque absorbeur à un longeron du véhicule. Par ailleurs, on appelle généralement "traverse" (appelée aussi barreau), une structure allongée rigide s'étendant transversalement au véhicule entre deux points par lesquels elle est fixée. On entend par direction longitudinale (X) du véhicule automobile la direction de déplacement du véhicule automobile, la direction transversale (Y) et la direction verticale (Z) étant perpendiculaires à la direction longitudinale. Généralement, la traverse est galbée et s'étend sensiblement dans la direction transversale (Y) du véhicule. On comprend que l'absorbeur de chocs est un module d'absorption de chocs ayant pour fonction d'absorber de l'énergie par déformation en cas de chocs, de préférence un absorbeur latéral de type "crash boxes" localisé au moins en partie dans le prolongement d'un longeron du véhicule, chacun étant conçu pour absorber l'énergie de chocs dirigés principalement dans l'axe du longeron qui le porte.

La poutre de chocs peut en outre comporter l'une ou plusieurs des caractéristiques suivantes, prises seules ou en combinaison.
- La bretelle relie la surface supérieure et/ou inférieure de l'absorbeur de chocs avec une partie frontale de la traverse. Ainsi, la bretelle s'étend depuis l'absorbeur vers une partie avant la de traverse, de façon à former un système d'accrochage, permettant une meilleure résistance à l'arrachement de la traverse par rapport à l'absorbeur.
- La bretelle encercle la traverse, c'est-à-dire qu'elle relie la surface inférieure et la surface supérieure de l'absorbeur de chocs en passant devant la poutre de chocs. Ceci permet un meilleur accrochage de la traverse avec l'absorbeur de chocs, la bretelle formant une ceinture devant la traverse, comparable à un cerclage de tonneau sur un plan transversal de la traverse. En d'autres termes, la bretelle rejoint de façon continue les surfaces supérieure et inférieure de l'absorbeur en passant devant la face frontale de la traverse. Avantageusement, la bretelle peut s'étendre sur la surface supérieure et/ou la surface inférieure de l'absorbeur de chocs sur tout le long de la direction longitudinale X de l'absorbeur de chocs, voire passer derrière l'absorbeurs de chocs dans le cas où la bretelle est venue de moulage avec une platine de fixation de l'absorbeur de chocs, de façon à encercler totalement l'ensemble de la traverse et de l'absorbeur de choc dans la direction X.

- En face frontale de la traverse, la bretelle suit (épouse) toutes les formes de la traverse, ces formes pouvant être planes ou arrondies, convexes ou concaves, ainsi que des angles. Ceci s'applique en particulier dans le cas où la traverse présente une section « en oméga » (Ω).
- La bretelle est reliée à une platine de fixation de l'absorbeur de chocs sur un longeron du véhicule. Cette platine forme une surface d'appui et de fixation de l'absorbeur de chocs sur le longeron. De préférence, la bretelle est venue de matière avec la platine.
- La poutre de chocs comprend plusieurs bretelles, disposées symétriquement dans la direction Y par rapport au plan médian en Y de l'absorbeur
- La bretelle présente une épaisseur comprise entre 2 et 4 mm, de préférence voisine de 2.2 mm. Cette épaisseur correspond par exemple à la dimension de la bretelle dans la direction Z du véhicule.
- La bretelle présente une largeur comprise entre 5 et 20 mm, de préférence voisine de 10 mm. Cette largeur correspond par exemple à la dimension de la bretelle dans la direction Y du véhicule.
- L'organe d'accrochage comprend au moins deux bretelles partiellement espacées, éventuellement complètement espacées, réparties sur la largeur en Y de l'absorbeur ou de la traverse, encerclant chacune localement la traverse. Ainsi on renforce le maintien en optimisant la quantité de matière, puisque l'on ne recouvre pas nécessairement toute la poutre de chocs par une unique bretelle continue sur la largeur de l'absorbeur. On comprend que les deux bretelles se trouvent en regard d'un même absorbeur latéral.
- Les bretelles partiellement espacées sont reliées entre-elles transversalement par des ponts, eux-mêmes espacés entre eux. Les ponts forment ainsi une sorte de maillage/quadrillage
- La bretelle est continue sur la largeur de l'absorbeur de choc.
- La traverse et l'absorbeur de chocs présentent chacun, à leurs extrémités en Y une surface latérale, l'organe d'accrochage comprenant en outre une ceinture latérale reliant les surfaces latérales de la traverse et de l'absorbeur de chocs. On comprend que la surface latérale de la traverse relie la surface supérieure et la surface inférieure de la traverse. Cette surface peut présenter une superficie très limitée, ne recouvrant que l'épaisseur de matière de l'extrémité libre de la traverse, se distinguant d'une surface pleine ou flanc couvrant aussi les espaces creux ou concaves de la section située en extrémité. On comprend que la surface latérale de l'absorbeur de chocs relie la surface supérieure et la surface inférieure de l'absorbeur de chocs. Cette ceinture latérale agit ainsi comme un complément de la bretelle se trouvant sur la surface supérieure et/ou inférieure pour maintenir la traverse assemblée à l'absorbeur de chocs en cas d'une sollicitation en compression. Cette ceinture latérale fournit ainsi une résistance complémentaire à celle des bretelles contre la désolidarisation de la traverse par rapport à l'absorbeur de chocs en cas de sollicitation en traction de l'interface, c'est-à-dire en cas de sollicitation en flexion de la traverse. Cette ceinture latérale fournit en outre un complément de résistance en cas d'une sollicitation en compression de l'ensemble traverse et absorbeur.
- La ceinture latérale recouvre la surface latérale de la traverse de façon à relier la surface latérale de l'absorbeur de chocs et une surface avant de la poutre de chocs. Ainsi, on ajoute un effet local de cerclage latéral de la poutre de chocs, qui vient s'ajouter au cerclage supérieur et/ou inférieur de la bretelle reliant les surfaces inférieures et/ou supérieures de la traverse et de l'absorbeur de chocs. On comprend que la surface avant de la poutre de chocs se trouve à l'avant du véhicule en considérant la direction longitudinale du véhicule.
- La ceinture latérale forme un flanc latéral recouvrant intégralement les surfaces latérales de la traverse et de l'absorbeur de chocs. La présence de ce flanc latéral est particulièrement avantageuse. D'une part, il forme un cadre latéral favorisant la liaison en encapsulant les surfaces latérales de la traverse et de l'absorbeur de chocs, et en augmentant la résistance de l'organe d'accrochage à la compression ou à la traction. D'autre part, l'épaisseur du flanc latéral permet de compenser les dispersions géométriques de la traverse, réalisée généralement sous forme d'un insert sur lequel on surmoule l'absorbeur et l'organe d'accrochage, ainsi que les dispersions de centrage de la traverse dans un moule d'injection. Ainsi grâce au flanc latéral, on peut compenser les tolérances de fabrication. Par exemple si l'insert est plus court que la dimension prévue, on maintient une dimension standard de l'ensemble en remplissant l'espace par augmentation de l'épaisseur du flanc de l'organe d'accrochage.
- Le flanc latéral présente une épaisseur supérieure à 4 mm, de préférence d'environ 5 mm. L'épaisseur correspond à la dimension moyenne du flanc latéral dans la direction transversale (Y) du véhicule. Cette épaisseur est particulièrement pertinente pour une poutre de chocs dont la tolérance de fabrication sur la longueur (direction transversale du véhicule) est voisine de +/-1 mm (millimètre) et dont la tolérance de centrage dans le moule est voisine de +/-1 mm.
- L'absorbeur de chocs se présente sous une forme sensiblement parallélépipédique, présentant une platine de fixation, destinée à être en appui contre un longeron du véhicule automobile, l'organe d'accrochage étant fixée sur cette platine de fixation, l'organe d'accrochage comprenant de préférence une nervure de renforcement s'étendant entre la platine de fixation et l'avant de l'organe d'accrochage. La nervure de renforcement permet de renforcer encore davantage la liaison entre la traverse et les absorbeurs de chocs, notamment en créant un équerrage en entre l'absorbeur de chocs et la platine de fixation. En outre, la nervure de renforcement permet d'augmenter l'absorption d'énergie.
- L'organe d'accrochage est venue de matière avec l'absorbeur de chocs. Ceci permet de renforcer considérablement la liaison mécanique entre la traverse et l'absorbeur de chocs. Selon une application particulièrement intéressante, l'absorbeur de chocs peut être directement surmoulé sur la traverse. Cela permet en outre, grâce à une unique étape de surmoulage, de fabriquer à la fois l'absorbeur et l'organe d'accrochage autour de la traverse.
- L'organe d'accrochage est obtenu par surmoulage de la traverse, éventuellement simultanément à un surmoulage de l'intégralité de l'absorbeur de chocs. Le surmoulage permet d'obtenir un ensemble d'un seul tenant dans lequel les liaisons sont solidement établies. En outre, la fabrication par surmoulage permet de façon avantageuse de combiner en même temps la fabrication et l'assemblage de ces pièces. Selon une variante, la bretelle peut être réalisée en plastique ou en tôle, et/ou par une tresse en fibre de verre, pouvant dans ces deux derniers cas être aussi surmoulés de matière plastique, pour assurer la fonction de cerclage.
- L'organe d'accrochage est en métal ou hybride métal/plastique.
- La poutre de chocs forme un module de chocs avant ou arrière, et présente en outre l'une ou plusieurs des fonctions choisies parmi le groupe comprenant un appui-bas pour piéton, une fixation d'un organe du véhicule tel qu'un organe électrique, un renfort tel qu'un renfort de porte, de toit ou d'aile de véhicule automobile.
- La traverse est un profilé présentant une section transversale de forme constante, par exemple une forme en Ω (oméga) ou U ou en W. Le profilé présente généralement une forme, de préférence à section en Y (section prise dans un plan perpendiculaire à la direction Y du véhicule) constante, issue d'une réalisation par pultrusion ou extrusion, en métal ou en matériau composite. Le profilé est allongé dans une direction correspondant à la direction transversale du véhicule.

L'invention concerne par ailleurs un procédé de fabrication d'une poutre de chocs comprenant une traverse et un absorbeur de chocs telle que défini précédemment, comprenant une étape de surmoulage de l'organe d'accrochage sur la traverse et sur l'absorbeur de chocs, ce surmoulage permettant éventuellement de former simultanément l'absorbeur de chocs et l'organe d'accrochage.

L'invention sera mieux comprise à la lecture des figures annexées, qui sont fournies à titre d'exemples et ne présentent aucun caractère limitatif, dans lesquelles :
- la figure 1 est une section en coupe schématique dans un plan XZ du véhicule d'une poutre de chocs comprenant une traverse et un absorbeur de chocs selon un premier mode de réalisation,
- la figure 2 est une section similaire à la figure 1 d'une poutre de chocs selon un deuxième mode de réalisation,
- la figure 3 est une une section similaire à la figure 1 d'une poutre de chocs selon un troisième mode de réalisation,
- la figure 4 est une vue schématique partielle de devant d'une poutre de chocs selon un quatrième mode de réalisation,
- la figure 5 représente des sections schématiques dans la direction transversale illustrant le mode de déformation de la poutre de chocs de la figure 4 avant et après un choc de type « Danner », et
- la figure 6 représente des sections similaires à la figure 5 illustrant le mode de déformation de la poutre de chocs de la figure 4 avant, en cours et après un choc de type « Bumper test ».

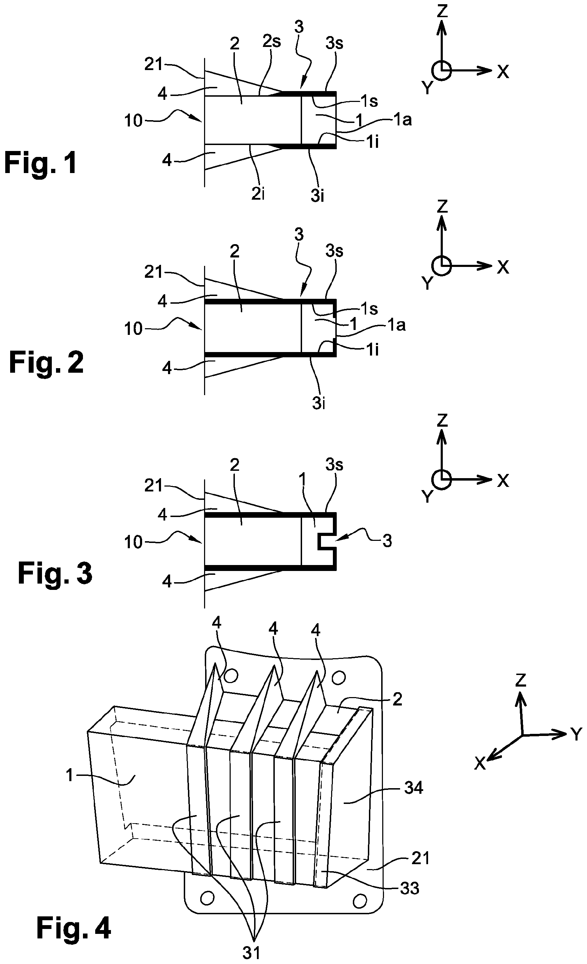

On se réfère maintenant à la figure 1, sur laquelle on a représenté une poutre de chocs 10 comprenant une traverse 1 et un absorbeur de chocs 2 pour véhicule automobile.

Dans le cas de la figure 1, la traverse 1 est un profilé de forme générale galbée vers l'avant X du véhicule, mais pouvant être de forme rectiligne, allongé dans une direction longitudinale du profilé qui correspond à la direction transversale Y du véhicule lorsque la poutre est montée sur le véhicule. Le profilé présente une section transversale de forme constante, en U dans cet exemple, et est réalisé par pultrusion, extrusion (par exemple d'aluminium), injection (par exemple une poutre de type HTPC) ou encore par compression (par exemple une poutre de type C-SMC) ou encore par pliage et emboutissage de tôle. La traverse 1 est de préférence réalisée en métal ou en matériau composite, ou encore comprend un insert en métal ou matériau composite qui peut être en outre surmoulé. L'absorbeur de chocs 2 se présente sous une forme sensiblement parallélépipédique, comprenant une platine de fixation ou plaque d'appui 21, destinée à être en appui contre un longeron du véhicule automobile. La traverse 1 et l'absorbeur de chocs 2 présentent chacun une surface supérieure 1s, 2s, orientée vers le haut du véhicule, et une surface inférieure 1i, 2i, orientée vers la route.

La poutre de chocs 10 comprend en outre un organe d'accrochage 3 de la traverse 1 sur l'absorbeur de chocs 2, permettant d'assurer une liaison plus robuste entre la traverse 1 et l'absorbeur de chocs 2. L'organe d'accrochage 3 comprend une bretelle supérieure 3s reliant les surfaces supérieures 1s et 2s de la traverse 1 et de l'absorbeur de chocs 2. On comprend que l'organe d'accrochage 3 peut de manière alternative ou combinée comprendre une bretelle inférieure 3i reliant les surfaces inférieures 1i et 2i de la traverse 1 et de l'absorbeur de chocs 2. On comprend aussi que l'organe d'accrochage 3 peut prendre une forme quelconque telle qu'une bretelle unique, plusieurs bretelles séparées ou partiellement séparées dans la direction transversale Y, ou encore une surface recouvrant toute la ligne de jonction supérieure ou inférieure de la traverse 1 et de l'absorbeur de chocs 2.

Sur le mode de réalisation de la figure 2, l'organe d'accrochage 3 présente une configuration plus avantageuse. Dans cet exemple, l'organe d'accrochage 3 encercle partiellement la face frontale de la traverse 1 en s'étendant sur tout le long des surfaces inférieure 1i et supérieure 1s de la traverse 1 jusqu'à une partie d'une surface avant 1a de la traverse 1, de façon à présenter une bretelle inférieure 3i et une bretelle supérieure 3s ayant chacune une section sensiblement en forme de L (cornière) selon un plan Y du véhicule. Cette forme en L est avantageuse, d'une part car elle permet d'augmenter la surface de contact entre les trois éléments, à savoir la traverse 1, l'absorbeur de chocs 2 et l'organe d'accrochage 3, de façon à renforcer la liaison entre eux et la résistance à la compression, d'autre part car l'extension de l'organe d'accrochage 3 sur la surface avant 1a de la traverse 1 permet d'assurer un effet de crochet de la traverse 1 sur l'absorbeur de chocs 2, empêchant la désolidarisation de la traverse 1 par rapport à l'absorbeur de chocs 2 en cas de sollicitation en traction. On comprend que l'organe d'accrochage 3 peut prendre avoir une section ayant d'autres formes l'effet de crochet sur la surface avant 1a étant particulièrement intéressant.

Sur le mode de réalisation de la figure 3, l'organe d'accrochage 3 présente une configuration préférée. Dans cet exemple, la traverse 1 présente de préférence une section transversale en W ou Ω (« oméga ») et l'organe d'accrochage 3 présente une bretelle 31 qui encercle totalement la traverse 1, en reliant la surface inférieure 2i et la surface supérieure 2s de l'absorbeur de chocs 2, en passant de façon continue devant la face frontale de la traverse 1, c'est-à-dire que la bretelle 31 passe de façon continue devant la face frontale et de préférence épouse la forme ou est plaquée plaque contre toute la forme / les pans de cette face frontale. Par ailleurs dans cet exemple, non seulement la bretelle 31 encercle les surfaces 1s, 1a et 1i de la poutre de chocs, mais en outre elle s'étend sur tout le long des surfaces inférieure 2i et supérieure 2s de l'absorbeur de chocs 2, jusqu'à la platine de fixation 21, sur laquelle est rapportée ou avec laquelle elle est venue de matière. Cette forme de l'organe d'accrochage 3 est très avantageuse car on obtient un cerclage complet de l'ensemble de la traverse 1 et l'absorbeur de chocs 2, comparable à un cerclage de tonneau, selon un plan transversal (en Y) de la traverse 1. Plus précisément, l'organe d'accrochage 3 et la platine de fixation 21 forment une section fermée autour de la traverse 1 et l'absorbeur de chocs 2.

Sur le mode de réalisation de la figure 4, l'organe d'accrochage 3 comprend plusieurs bretelles 31 sensiblement parallèles entre elles, plus précisément trois, réparties dans la direction transversale du véhicule Y et complètement espacées. Cela permet d'optimiser la quantité de matière et l'effet de renforcement de la liaison mécanique et de l'accrochage.

Par ailleurs, selon l'invention, l'organe d'accrochage 3 comprend une ceinture latérale comprenant dans cet exemple une bretelle latérale 33 et un flanc latéral 34, et reliant les surfaces latérales de la traverse 1 et de l'absorbeur de chocs 2. Plus précisément ici, la ceinture latérale 33, 34 permet de recouvrir intégralement les surfaces latérales de la traverse 1 et de l'absorbeur de chocs 2, comme illustré sur la figure 4. La présence de cette ceinture latérale est particulièrement avantageuse. D'une part, elle forme un cadre latéral favorisant l'adhésion en encapsulant les surfaces latérales de la traverse 1 et de l'absorbeur de chocs 2. D'autre part, la ceinture latérale permet de compenser les dispersions géométriques de la traverse 1, réalisée généralement sous forme d'un insert sur lequel on surmoule l'organe d'accrochage 3, ainsi que les dispersions de centrage de la traverse 1 dans le moule d'injection. Le flanc 33 présente une épaisseur de préférence supérieure à 4 mm.

On comprend que la ceinture latérale peut prendre des formes différentes, notamment entre la bretelle 33 et les bretelles 31, ou encore le flanc latéral 34 peut être mince ou une surface plane. De préférence, la bretelle 33 sera plus large que les bretelles 31, et les bretelles de moins en moins larges en allant vers le centre en Y0 de la poutre, cette configuration correspondant aux niveaux de sollicitations mécaniques subies, plus élevés en extrémité de la poutre.

Selon un mode de réalisation, l'organe d'accrochage peut être une partie distincte de l'absorbeur de chocs 2 en étant surmoulé par-dessus. Ainsi, l'organe d'accrochage forme un cadre rapporté par-dessus l'absorbeur de chocs.

Sur le mode de réalisation de la figure 4, l'organe d'accrochage 3 est venu de matière avec l'absorbeur de chocs 2. Ceci permet de renforcer considérablement la liaison mécanique entre la traverse 1 et l'absorbeur de chocs 2. Ainsi selon une application particulièrement intéressante, l'absorbeur de chocs 2 est directement surmoulé derrière la traverse 1, simultanément au surmoulage de l'organe d'accrochage 3. Cela permet, grâce à une unique étape de surmoulage, de fabriquer à la fois l'absorbeur 2 et l'organe d'accrochage 3 autour de la traverse 1.

Avantageusement, l'organe d'accrochage 3 comprend une nervure de renforcement 4 s'étendant entre la platine de fixation 21 et l'avant de l'organe d'accrochage 3, comme illustrée sur les figures 1-4.

De préférence, la poutre de chocs 10 comprenant la traverse 1 et l'absorbeur de chocs 2 forme un module de chocs avant ou arrière, et présentant en outre l'une ou plusieurs des fonctions choisies parmi le groupe comprenant un appui-bas pour piéton, une fixation d'un organe du véhicule tel qu'un organe électrique, un renfort tel qu'un renfort de porte, de toit ou d'aile de véhicule automobile.

On comprend que le procédé de fabrication de la poutre de chocs 10 comporte une étape de surmoulage de l'organe d'accrochage 3 sur la traverse 1 et l'absorbeur de chocs 2, ce surmoulage permettant éventuellement de former simultanément l'absorbeur de chocs 2 et l'organe d'accrochage 3.

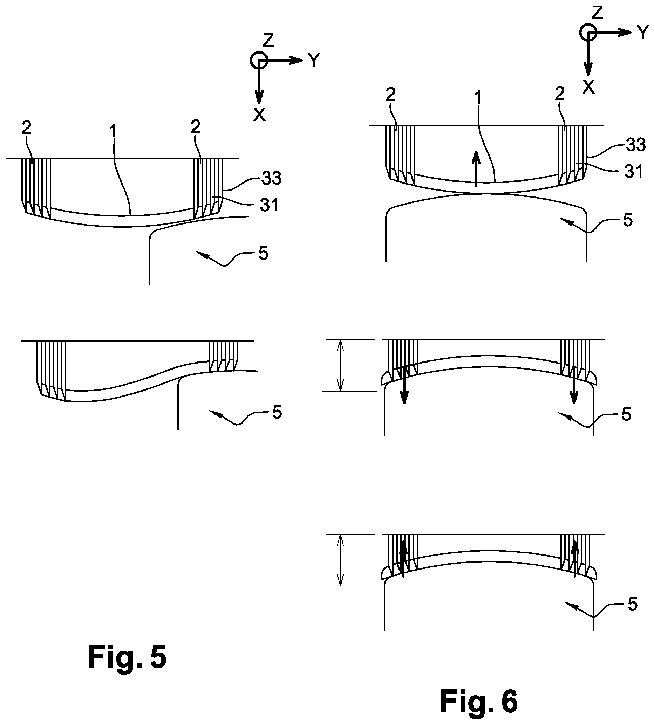

Comme on peut le voir sur le dessin du bas de la figure 5, en cas de choc de type Danner avec un obstacle 5 ayant un impact sur le côté du véhicule, la traverse 1 se déforme, absorbant ainsi une part de l'énergie du choc et l'un des absorbeurs latéraux 2 travaille en compression. Le dessin du haut de la figure 5 montre les éléments avant le choc. L'organe d'accrochage 3 permet de participer à l'absorption d'énergie en augmentant la surface de contact entre la poutre et l'absorbeur 2.

Par ailleurs en cas de choc de type « Bumper test », illustré sur la figure 6, lors d'un impact frontal avec un obstacle 5', la traverse 1 qui était initialement galbée avant le choc (dessin du haut) commence par se déformer en perdant son galbe (dessin du milieu), ce qui exerce une traction sur les absorbeurs latéraux 2, puis en fin de choc (dessin du bas), exerce une pression sur les absorbeurs en les comprimant. L'organe d'accrochage 3 permet en particulier de maintenir une liaison robuste entre la traverse 1 et les absorbeurs 2 lors de ces deux étapes. Cela s'applique également en cas de poutre de choc rectiligne.

On comprend que l'invention n'est pas limitée aux modes de réalisation présentés ci-dessus et que d'autres modes de réalisation apparaîtront clairement à l'homme du métier.

## Revendications

1. Poutre de chocs (10) pour véhicule automobile comprenant une traverse (1) et au moins un absorbeur de chocs (2), la traverse et l'absorbeur de chocs présentant chacun une surface supérieure (1s, 2s) et une surface inférieure (1i, 2i), la poutre de chocs comprenant un organe (3) d'accrochage de la traverse (1) sur l'absorbeur de chocs (2), l'organe d'accrochage comprenant au moins deux bretelles (3i, 3s, 31) reliant les surfaces supérieures (1s, 2s) de la traverse (1) et de l'absorbeur de chocs (2) et/ou les surfaces inférieures (1i, 2i) de la traverse (1) et de l'absorbeur de chocs (2), les au moins deux bretelles étant partiellement espacées, éventuellement complètement espacées, et réparties dans la direction transversale, encerclant chacune localement la traverse (1), et en ce que la traverse (1) et l'absorbeur de chocs (2) présentent chacun une surface latérale, **caractérisée en ce que** l'organe d'accrochage (3) comprend en outre une ceinture latérale (33, 34) reliant les surfaces latérales de la traverse (1) et de l'absorbeur de chocs (2), la ceinture latérale (33, 34) recouvrant de préférence la surface latérale de la traverse (1) de façon à relier la surface latérale de l'absorbeur de chocs (2) et une surface avant (1a) de la poutre de chocs.

2. Poutre de chocs selon la revendication précédente, dans laquelle la bretelle (31) encercle la traverse (1), c'est-à-dire qu'elle relie la surface inférieure (2i) et la surface supérieure (2s) de l'absorbeur de chocs (2) en passant devant la traverse (1).

3. Poutre de choc selon l'une quelconque des revendications précédentes, dans laquelle les bretelles (31) sont reliées entre-elles par des ponts, eux-mêmes espacés entre eux.

4. Poutre de chocs selon l'une quelconque des revendications 1 à 2, dans laquelle une des au moins deux bretelles (3i, 3s, 31) est continue sur la largeur de l'absorbeur de choc (2).

5. Poutre de chocs selon l'une quelconque des revendications précédentes, dans laquelle la ceinture latérale (33, 34) forme un flanc latéral (34) recouvrant intégralement les surfaces latérales de la traverse (1) et de l'absorbeur de chocs (2), le flanc présentant une épaisseur de préférence supérieure à 4 mm.

6. Poutre de chocs selon l'une quelconque des revendications précédentes, dans laquelle l'absorbeur de chocs (2) se présente sous une forme sensiblement parallélépipédique, présentant une platine de fixation (21), destinée à être en appui contre un longeron du véhicule automobile, l'organe d'accrochage (3) étant fixé sur cette platine de fixation (21), l'organe d'accrochage comprenant de préférence une nervure de renforcement (4) s'étendant entre la platine de fixation (21) et l'avant de l'organe d'accrochage (3).

7. Poutre de chocs selon l'une quelconque des revendications précédentes, dans laquelle l'organe d'accrochage (3) est venu de matière avec l'absorbeur de chocs (2).

8. Poutre de chocs selon l'une quelconque des revendications précédentes, dans laquelle l'organe d'accrochage (3) est obtenu par surmoulage de la traverse (1), éventuellement simultanément à un surmoulage de l'intégralité de l'absorbeur de chocs (2).

9. Poutre de chocs selon l'une quelconque des revendications précédentes, dans laquelle l'organe (3) d'accrochage est en métal ou hybride métal/plastique.

10. Poutre de chocs selon l'une quelconque des revendications précédentes, formant un module de chocs avant ou arrière et présentant en outre l'une ou plusieurs des fonctions choisies parmi le groupe comprenant un appui-bas pour piéton, une fixation d'un organe du véhicule tel qu'un organe électrique, un renfort tel qu'un renfort de porte, de toit ou d'aile de véhicule automobile.

11. Poutre de chocs selon l'une quelconque des revendications précédentes, dans laquelle la traverse (1) est un profilé présentant une section transversale de forme constante , par exemple une forme en oméga (Ω), en U ou en W, la traverse étant de préférence réalisée en métal ou en matériau composite.

12. Procédé de fabrication d'une poutre de chocs selon l'une quelconque des revendications précédentes, comprenant une étape de surmoulage de l'organe d'accrochage (3) sur la traverse (1) et sur l'absorbeur de chocs (2), ce surmoulage permettant éventuellement de former simultanément l'absorbeur de chocs (2) et l'organe d'accrochage (3).

## Patentansprüche

1. Aufprallträger (10) für ein Kraftfahrzeug mit einem Querträger (1) und mindestens einem Stoßdämpfer (2), wobei der Querträger und der Stoßdämpfer jeweils eine obere Fläche (1s, 2s) und eine untere Fläche (1i, 2i) aufweisen, wobei der Aufprallträger ein Element (3) zum Befestigen des Querträgers (1) an dem Stoßdämpfer (2) aufweist, wobei das Befestigungselement mindestens zwei Gurte (3i, 3s, 31) aufweist, die die oberen Flächen (1s, 2s) der Querträger (1) und des Stoßdämpfers (2) und/oder die unteren Flächen (1i, 2i) der Querträger (1) und des Stoßdämpfers (2) verbinden, wobei die mindestens zwei Gurte teilweise beabstandet sind, eventuell vollständig beabstandet sind und in Querrichtung verteilt sind, jeweils lokal um den Querträger herum, wobei der Querträger (1) und der Stoßdämpfer (2) jeweils eine Seitenfläche aufweisen, **dadurch gekennzeichnet, dass** das Befestigungselement (3) ferner einen seitlichen Gurt (33, 34) aufweist, der die Seitenflächen des Querträgers (1) und des Stoßdämpfers (2) verbindet, wobei der Seitengurt (33, 34) vorzugsweise die Seitenfläche des Querträgers (1) abdeckt, um die Seitenfläche des Stoßdämpfers (2) und eine vordere Fläche (1a) des Stoßbalkens zu verbinden.

2. Aufprallträger nach dem vorhergehenden Anspruch, wobei der Gurt (31) die Querträger (1) umschließt, d.h. dass er die Unterseite (2i) und die Oberseite (2s) des Stoßdämpfers (2) durch den Querträger (1) hindurch verbindet.

3. Aufprallträger nach einem der vorhergehenden Ansprüche, wobei die Gurte (31) durch Brücken miteinander verbunden sind, die ihrerseits voneinander beabstandet sind.

4. Aufprallträger nach einem der Ansprüche 1 bis 2, wobei einer der mindestens zwei Gurte (3i, 3s, 31) über die Breite des Stoßdämpfers (2) durchgehend ist.

5. Aufprallträger nach einem der vorhergehenden Ansprüche, wobei der Seitengurt (33, 34) eine Seitenflanke (34) bildet, die die Seitenflächen des Querträgers (1) und des Stoßdämpfers (2) vollständig abdeckt, wobei die Flanke eine Dicke von vorzugsweise mehr als 4 mm aufweist.

6. Aufprallträger nach einem der vorhergehenden Ansprüche, bei dem der Stoßdämpfer (2) eine im wesentlichen parallelepipedische Form aufweist, mit einer Befestigungsplatte (21), die dazu bestimmt ist, an einem Längsträger des Kraftfahrzeugs anzuliegen, wobei das Befestigungselement (3) an dieser Befestigungsplatte (21) befestigt ist, wobei das Befestigungselement vorzugsweise eine Verstärkungsrippe (4) aufweist, die sich zwischen der Befestigungsplatte (21) und der Vorderseite des Befestigungselements (3) erstreckt.

7. Aufprallträger nach einem der vorhergehenden Ansprüche, wobei das Befestigungselement (3) einstückig mit dem Stoßdämpfer (2) ausgebildet ist.

8. Aufprallträger nach einem der vorhergehenden Ansprüche, bei dem das Befestigungselement (3) durch Umspritzen des Querträgers (1), gegebenenfalls gleichzeitig mit einem Umspritzen des gesamten Stoßdämpfers (2), erhalten wird.

9. Aufprallträger nach einem der vorhergehenden Ansprüche, wobei das Befestigungselement (3) aus Metall oder Metall/Kunststoff-Hybrid besteht.

10. Aufprallträger nach einem der vorhergehenden Ansprüche, der ein vorderes oder hinteres Aufprallmodul bildet und ferner eine oder mehrere der Funktionen aufweist, die aus der Gruppe ausgewählt sind, die eine Fußgängerniederhalterung, eine Befestigung einer Fahrzeugkomponente, wie z.B. einer elektrischen Komponente, eine Verstärkung, wie z.B. eine Tür-, Dach- oder Kotflügelverstärkung eines Kraftfahrzeugs, beinhaltet.

11. Stoßdämpfer nach einem der vorhergehenden Ansprüche, wobei der Querträger (1) ein Profil mit einer konstanten Querschnittsform ist, beispielsweise eine Omega- (Ω), U- oder W-Form, wobei der Querträger vorzugsweise aus Metall oder Verbundwerkstoff besteht.

12. Verfahren zur Herstellung eines Stoßdämpfers nach einem der vorhergehenden Ansprüche, aufweisend einen Schritt des Umspritzens des Befestigungselements (3) an den Querträger (1) und an dem Stoßdämpfer (2), wobei dieses Umspritzen möglicherweise das gleichzeitige Formen des Stoßdämpfers (2) und des Befestigungselements (3) ermöglicht.

## Claims

1. Impact beam (10) for a motor vehicle comprising a cross member (1) and at least one shock absorber (2), the cross member and the shock absorber each having an upper surface (1s, 2s) and a lower surface (1i, 2i), the impact beam comprising a hooking member (3) for attaching the cross member (1) on the shock absorber (2), the hooking member comprising at least two straps (3i, 3s, 31) connecting the upper surfaces (1s, 2s) of the cross member (1) and the shock absorber (2) and / or the lower surfaces (1i, 2i) of the cross member (1) and the shock absorber (2), the at least two straps being partially spaced, optionally completely spaced apart, and distributed in the transverse direction, each locally encircling the cross member (1), and the cross member (1) and the shock absorber (2) each having a lateral surface, **characterized in that** the hooking member (3) further comprises a lateral strap (33, 34) connecting the lateral surfaces of the cross member (1) and of the shock absorber (2), the lateral strap (33, 34) preferably covering the lateral surface of the cross member (1) so as to connect the lateral surface of the shock absorbers (2) and a front surface (1a) of the impact beam.

2. Impact beam according to the preceding claim, wherein the strap (31) encircles the cross member (1), that is to say it connects the lower surface (2i) and the upper surface (2s) of the shock absorber (2) by passing in front of the cross member (1).

3. Impact beam according to any one of the preceding claims, wherein the straps (31) are interconnected by bridges, themselves spaced apart from each other.

4. Impact beam according to any one of claims 1 to 2, wherein one of the at least two straps (3i, 3s, 31) is continuous over the width of the shock absorber (2).

5. Impact beam according to any one of the preceding claims, wherein the lateral strap (33, 34) forms a lateral flank (34) integrally covering the lateral surfaces of the cross member (1) and the shock absorber (2), the flank having a thickness preferably greater than 4 mm.

6. Impact beam according to any one of the preceding claims, wherein the shock absorber (2) is in a substantially parallelepipedal shape, having an attachment plate (21) configured to bear against a side member of the motor vehicle, the hooking member (3) being fixed to the attachment plate (21), the hooking member preferably comprising a reinforcement rib (4) extending between the attachment plate (21) and the front of the hooking member (3).

7. Impact beam according to any one of the preceding claims, wherein the hooking member (3) is made in one piece with the shock absorber (2).

8. Impact beam according to any one of the preceding claims, wherein the hooking member (3) is obtained by overmolding of the cross member (1), optionally as the same time as overmolding the entire shock absorber (2).

9. Impact beam according to any one of the preceding claims, wherein the hooking member (3) is made of metal or metal/plastic hybrid.

10. Impact beam according to any one of the preceding claims, forming a front or rear impact module and further providing one or more of the functions chosen from the group comprising a lower protection beam for pedestrian, an attachment for a vehicle component such as an electrical component, a stiffener such as a motor vehicle door, roof or wing stiffener.

11. Impact beam according to any one of the preceding claims, wherein the cross member (1) is a profile having a cross section of constant shape, for example an omega (Ω), U or W shape, the cross member preferably being made of metal or composite material.

12. Method of manufacturing a impact beam according to any one of the preceding claims, comprising a step of overmolding the hooking member (3) on the cross member (1) and the shock absorber (2).), this overmolding operation optionally being used to manufacture the shock absorber (2) and the hooking member (3) simultaneously.
